# EUROPEAN PATENT APPLICATION

(11) **EP 4 811 442 A1**
(43) Date of publication of application: **23.09.2026**
(21) Application number: 26154014.0
(22) Date of filing: 26.01.2026
(51) Int. Cl.: H01M 4/134, H01M 4/36, H01M 4/38, H01M 10/0525, H01M 10/0562, H01M 4/62

(54) **PARTICULATE ELECTRODE ACTIVE MATERIAL COMPOSITE, ELECTRODE MIXTURE, AND BATTERY**

(30) Priority: 17.03.2025 JP 2025042494
(71) Applicant: Toyota Jidosha Kabushiki Kaisha, Toyota-shi, Aichi-ken 471-8571 (JP)
(72) Inventor: Nakai, Takaaki, Toyota-shi, Aichi-ken,, 471-8571 (JP); Furuya, Ryosuke, Toyota-shi, Aichi-ken,, 471-8571 (JP); Nomoto, Kazushige, Toyota-shi, Aichi-ken,, 471-8571 (JP); Nakamoto, Hirofumi, Toyota-shi, Aichi-ken,, 471-8571 (JP); Kudo, So, Toyota-shi, Aichi-ken,, 471-8571 (JP); Yokoi, Yuma, Toyota-shi, Aichi-ken,, 471-8571 (JP)
(74) Representative: Winter, Brandl - Partnerschaft mbB

(57) **Abstract**

The present disclosure provides particulate electrode active material composite capable of alleviating the influence of expansion and contraction of silicon during charging and discharging of a battery, an electrode mixture including such particulate composite, and a battery including such an electrode mixture. The particulate electrode active material composite of the present disclosure is formed of a plurality of silicon particles and a carbon material binding the plurality of silicon particles to each other. In the particulate electrode active material composite of the present disclosure, the G/D ratio of the carbon material is 0.2 or more in a Raman spectrum, and/or the C=O/C-O area ratio and/or the C=O/C-O intensity ratio of the carbon material is 5.0 or less in an XPS spectrum.

## Description

### TECHNICAL FIELD

The present disclosure relates to particulate electrode active material composite, an electrode mixture, and a battery.

### BACKGROUND

PTL 1 discloses a negative electrode active material for an all-solid-state battery as granulated particle (particulate electrode active material composite), composed of a binder and negative electrode active material particles, which are a composite of silicon (Si) and carbon, the granulated particle having a median diameter (D50) of 25 µm or less.

Silicon, serving as an electrode active material, is known to undergo expansion and contraction in response to charging and discharging of a battery.

### [CITATION LIST]

### [PATENT LITERATURE]

[PTL 1] Japanese Unexamined Patent Publication (Kokai) No. 2019-021571

### SUMMARY

### [TECHNICAL PROBLEM]

The particulate electrode active material composite can alleviate the influence of expansion and contraction of silicon during charging and discharging of a battery by voids in the particulate composite. However, there is room for improvement in alleviating the influence of such expansion and contraction in the particulate electrode active material composite containing silicon.

An object of the present disclosure is to provide particulate electrode active material composite capable of alleviating the influence of expansion and contraction of silicon during charging and discharging of a battery, an electrode mixture including such particulate composite, and a battery including such an electrode mixture.

The present inventor has found that this object can be achieved by the following means.

### <Aspect 1>

Particulate electrode active material composite,
wherein the particulate electrode active material composite is formed of a plurality of silicon particles and a carbon material binding the plurality of silicon particles to each other, wherein
in a Raman spectrum, a G/D ratio of the carbon material is 0.2 or more, and/or
in an XPS spectrum, a C=O/C-O area ratio of the carbon material and/or a C=O/C-O intensity ratio of the carbon material is 5.0 or less.

### <Aspect 2>

The particulate composite according to aspect 1, wherein in the Raman spectrum, the G/D ratio of the carbon material is 0.2 or more.

### <Aspect 3>

The particulate composite according to aspect 2, wherein in the Raman spectrum, the G/D ratio of the carbon material is from 1.0 to 2.0.

### <Aspect 4>

The particulate composite according to aspect 1, wherein in the XPS spectrum, the C=O/C-O area ratio of the carbon material and/or the C=O/C-O intensity ratio of the carbon material is 5.0 or less.

### <Aspect 5>

The particulate composite according to aspect 4, wherein in the XPS spectrum,
the C=O/C-O area ratio of the carbon material is 2.0 or less, and/or
the C=O/C-O intensity ratio of the carbon material is 3.0 or less.

### <Aspect 6>

The particulate composite according to aspects 1 to 5, wherein a breaking strength is from 3.0 MPa to 10.0 MPa.

### <Aspect 7>

The particulate composite according to aspects 1 to 6, wherein the silicon particles are porous silicon particles.

### <Aspect 8>

An electrode mixture including the particulate composite according to aspects 1 to 7.

### <Aspect 9>

The electrode mixture according to aspect 8, wherein the electrode mixture further includes solid electrolyte particles.

### <Aspect 10>

The electrode mixture according to aspect 9, wherein the solid electrolyte particles are sulfide solid electrolyte particles.

### <Aspect 11>

A battery having an electrode active material layer, wherein
the electrode active material layer contains the electrode mixture according to aspects 8 to 10.

### <Aspect 12>

The battery according to aspect 11, wherein the battery is a solid-state battery.

### [ADVANTAGEOUS EFFECTS OF INVENTION]

According to the present disclosure, it is possible to provide particulate electrode active material composite capable of alleviating the influence of expansion and contraction of silicon during charging and discharging of a battery, an electrode mixture including such particulate composite, and a battery including such an electrode mixture.

### BRIEF DESCRIPTION OF DRAWINGS

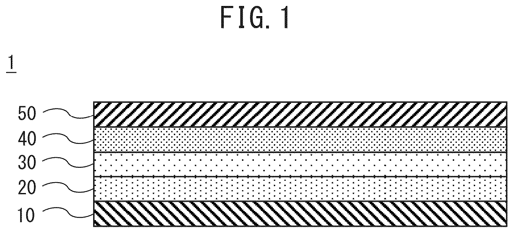

Fig. 1 is a schematic cross-sectional view illustrating an example of a battery of the present disclosure.

### DESCRIPTION OF EMBODIMENTS

Hereinafter, embodiments of the present disclosure will be described in detail. However, it should be noted that the present disclosure is not limited to the following embodiments, and can be variously modified within the scope thereof.

### <<Particulate Electrode Active Material Composite>>

The particulate electrode active material composite of the present disclosure is formed of a plurality of silicon particles and a carbon material binding the plurality of silicon particles to each other. In the particulate electrode active material composite of the present disclosure, the G/D ratio of the carbon material is 0.2 or more in a Raman spectrum, and/or the C=O/C-O area ratio and/or the C=O/C-O intensity ratio of the carbon material is 5.0 or less in an XPS spectrum.

As described above, silicon, serving as an electrode active material, causes expansion and contraction in response to charging and discharging of the battery. As a technique for alleviating the influence of such expansion and contraction, a technique of forming a plurality of silicon particles, serving as primary particles, into a secondary particle to obtain a composite particle is known. In this technique, voids can be formed inside the particulate composite, and thus the influence of expansion and contraction of silicon can be alleviated.

The present inventors have found that even when the composite particle obtained by forming silicon particles into a secondary particle is used, the influence of expansion and contraction of silicon cannot be sufficiently alleviated in some cases. The reason for this is not intended to be bound by any theory, but is presumed to be as follows. Specifically, it is considered that the composite particle may be deformed by application of an intended or unintended compressive stress during production of an electrode mixture including the composite particle and/or during formation of an electrode active material layer. As a result, it is considered that the voids in the composite particle cannot be maintained, and therefore, the influence of the expansion and contraction of silicon cannot be sufficiently alleviated.

In contrast, the present inventors have found that, in particulate electrode active material composite, formed of a plurality of silicon particles and a carbon material binding the plurality of silicon particles to each other, when the G/D ratio of the carbon material and/or the C=O/C-O area ratio and/or the C=O/C-O intensity ratio of the carbon material are within predetermined ranges, the influence of expansion and contraction of silicon in response to charging and discharging of a battery can be alleviated.

The reason for this is not intended to be bound by any theory, but is presumed to be as follows. Specifically, it is considered that, when the G/D ratio of the carbon material and/or the C=O/C-O area ratio and/or the C=O/C-O intensity ratio of the carbon material are within predetermined ranges, the strength of the particulate electrode active material composite can be increased, and thus deformation due to compressive stress is less likely to occur. As a result, it is considered that the voids in the particulate composite can be maintained, and therefore, the influence of the expansion and contraction of silicon in response to charging and discharging of the battery can be alleviated.

The particulate electrode active material composite is a secondary particle formed by aggregation of a plurality of silicon particles, serving as primary particles. The particulate electrode active material composite may be a secondary particle formed by granulating a plurality of silicon particles. In the present disclosure, the term "particulate electrode active material composite" may be simply referred to as "particulate composite".

The "electrode active material" may be a "positive electrode active material" or a "negative electrode active material", particularly a "negative electrode active material".

Hereinafter, each element constituting the particulate electrode active material composite of the present disclosure will be described.

The particulate electrode active material composite of the present disclosure is formed of a plurality of silicon particles and a carbon material binding the plurality of silicon particles to each other.

### <Silicon Particles>

Silicon in silicon particles, serving as primary particles, functions as an electrode active material and undergoes expansion and contraction in response to charging and discharging of the battery.

The composition of the silicon particles is not particularly limited. The proportion of silicon in all elements contained in the silicon particles may be, for example, 50 mol% or more, 70 mol% or more, 90 mol% or more, 95 mol% or more, or 99 mol% or more. The silicon particles may or may not contain an element other than silicon. Examples of the element other than silicon include Sn, Fe, Co, Ni, Ti, Cr, B, and P, in addition to Li. The silicon particles may include an oxide of silicon.

The silicon particles may be amorphous or crystalline. The crystal phase included in the silicon particles is not particularly limited.

The silicon particles may be porous silicon particles. Specifically, the silicon particles may each have a plurality of pores. As a result, the influence of expansion and contraction of silicon can be alleviated not only by voids in the particulate electrode active material composite described later but also by the pores of the silicon particles. The number of pores, pore volume, pore diameter, and the like of the porous silicon particles are not particularly limited, and can be appropriately set in consideration of the magnitude of expansion and contraction of silicon and the like. The pore diameter may be, for example, on the order of nanometers.

The pores in the porous silicon particles can be formed, for example, by eliminating a predetermined element in silicon particles contained in a composite particle precursor when the composite particle precursor is fired in the method for producing the particulate electrode active material composite of the present disclosure described later.

The particle diameter, shape, and the like of the silicon particles are not particularly limited.

The content of the silicon particles in the particulate electrode active material composite is not particularly limited, and can be appropriately set in consideration of a desired battery capacity and the like.

### <Carbon Material>

The carbon material binds a plurality of silicon particles to each other. Specifically, the carbon material functions as a binder.

The carbon material is not particularly limited, and may be, for example, a carbonized carbon-containing compound. The carbon-containing compound is not particularly limited, and may be, for example, a saccharide. The saccharide is not particularly limited, and may be, for example, a monosaccharide, a polysaccharide, or a combination thereof. The monosaccharide is not particularly limited, and may be, for example, fructose, glucose, or a combination thereof. The polysaccharide is not particularly limited, and may be, for example, sucrose, maltose, or a combination thereof.

The content of the carbon material in the particulate electrode active material composite is not particularly limited, and can be appropriately set in consideration of desired binding properties and the like. The content of the carbon material may be, for example, 0.1 mass% or more, 0.5 mass% or more, 1.0 mass% or more, 1.5 mass% or more, or 2.0 mass% or more, and may be 30 mass% or less, 20 mass% or less, 10 mass% or less, 5.0 mass% or less, 4.0 mass% or less, 3.0 mass% or less, or 2.0 mass% or less.

### <Parameter Related to Carbon Material>

In the particulate composite of the present disclosure, the G/D ratio of the carbon material is 0.2 or more in a Raman spectrum, and/or the C=O/C-O area ratio and/or the C=O/C-O intensity ratio of the carbon material is 5.0 or less in an X-ray photoelectron spectroscopy (XPS) spectrum. This can increase the strength of the particulate composite, and thus the influence of expansion and contraction of silicon during charging and discharging of the battery can be alleviated.

In the present disclosure, the "G/D ratio" refers to the proportion of the maximum peak intensity of the G band to the maximum peak intensity of the D band in the Raman spectrum. In the particulate composite of the present disclosure, the relatively large G/D ratio results in the carbon material having an appropriate crystallinity, and thus the strength of the particulate composite is high.

In the present disclosure, the "C=O/C-O area ratio" refers to the proportion of the peak area of the binding energy of C=O to the peak area of the binding energy of C-O in the XPS spectrum. In the present disclosure, the "C=O/C-O intensity ratio" refers to the proportion of the maximum peak intensity of the binding energy of C=O to the maximum peak intensity of the binding energy of C-O in the XPS spectrum. In the particulate composite of the present disclosure, it is considered that when the C=O/C-O area ratio and/or the C=O/C-O intensity ratio is relatively small, i.e., the proportion of C-O is relatively large, continuous connection of structures is promoted via an ether bond, thereby exhibiting high breaking strength. In contrast, when the C=O/C-O area ratio and/or the C=O/C-O intensity ratio is relatively large, i.e., when the proportion of C=O is large, the structure is no longer connected, and as a result, it is considered that low breaking strength is exhibited.

In the particulate composite of the present disclosure, the G/D ratio of the carbon material in the Raman spectrum may be from 0.5 to 3.0, from 1.0 to 2.0, or from 1.3 to 1.6. The G/D ratio of the carbon material may be 0.5 or more, 0.8 or more, 1.0 or more, 1.2 or more, 1.3 or more, 1.4 or more, or 1.5 or more, and may be 5.0 or less, 4.0 or less, 3.0 or less, 2.0 or less, 1.8 or less, 1.7 or less, 1.6 or less, or 1.5 or less. This can effectively alleviate the influence of expansion and contraction of silicon during charging and discharging of the battery.

The analysis of the G/D ratio can be performed by measuring the intensity ratio of the G band and the D band by Raman spectroscopy, and calculating the proportion of the maximum peak intensity of the G band to the maximum peak intensity of the D band. For the analysis of the G/D ratio, for example, a microscopic Raman spectrometer XploRA PLUS available from HORIBA, Ltd. can be used.

In the particulate composite of the present disclosure, in the XPS spectrum, the C=O/C-O area ratio of the carbon material may be 0.0 or more, 0.1 or more, 0.3 or more, 0.5 or more, 0.8 or more, 1.0 or more, 1.1 or more, or 1.2 or more, and may be 4.0 or less, 3.0 or less, 2.5 or less, 2.0 or less, 1.5 or less, 1.4 or less, 1.3 or less, or 1.2 or less, and/or the C=O/C-O intensity ratio of the carbon material may be 0.0 or more, 0.5 or more, 0.8 or more, 1.0 or more, 1.5 or more, 2.0 or more, 2.1 or more, 2.2 or more, or 2.3 or more, and may be 4.0 or less, 3.5 or less, 3.0 or less, 2.5 or less, 2.4 or less, or 2.3 or less. This can effectively alleviate the influence of expansion and contraction of silicon during charging and discharging of the battery.

The analysis of the C=O/C-O area ratio and the C=O/C-O intensity ratio can be performed by measuring the peak area and peak intensity of the binding energy of C=O and C-O by X-ray electron spectroscopy and calculating the proportion of the value for C=O to the value for C-O. For the analysis of the C=O/C-O area ratio and the C=O/C-O intensity ratio of the carbon material, for example, PHI5000 VersaProbe II available from ULVAC-PHI, Inc. can be used.

### <Void>

The particulate electrode active material composite of the present disclosure has a plurality of voids. The voids can also alleviate the influence of expansion and contraction of silicon during charging and discharging of the battery.

The number of voids, porosity, size of the voids, and the like in the particulate electrode active material composite are not particularly limited, and can be appropriately set in consideration of, for example, the magnitude of expansion and contraction of silicon.

### <Breaking Strength>

In the present disclosure, the breaking strength is an indicator of the strength of the particulate composite against compressive stress.

The particulate composite of the present disclosure may have a breaking strength of 3.0 MPa to 10.0 MPa. The breaking strength may be 3.0 MPa or more, 4.0 MPa or more, 4.5 MPa or more, 5.0 MPa or more, 5.5 MPa or more, 6.0 MPa or more, 6.5 MPa or more, 7.0 MPa or more, 7.5 MPa or more, 8.0 MPa or more, or 8.5 MPa or more, and may be 10.0 MPa or less, 9.5 MPa or less, or 9.0 MPa or less. This can effectively alleviate the influence of expansion and contraction of silicon during charging and discharging of the battery.

The breaking strength can be measured by scattering an extremely small amount of particulate composite onto a sample stage of a measuring device, measuring the diameters in the X direction and Y direction, setting the average particle diameter as d, and applying a load to each particle. The number of samples is preferably large, and may be, for example, 1 or more, 3 or more, 5 or more, 10 or more, 50 or more, or 100 or more. As for the apparent breaking strength, when spherical particles are compressed, a compressive stress is distributed in the vicinity of a loading point, but a tensile stress is distributed over almost the entire remaining surface. Therefore, when the displacement in the load-displacement diagram rapidly increases, it is determined that the particles are destroyed on a large scale, and the apparent breaking strength of the particles can be calculated using the following formula.${S}_{t} = \frac{2.8 P}{{πd}^{2}}$
St: apparent breaking strength
P: breaking load
d: average particle diameter of measured particle

For the measurement of the breaking strength, an MCT-210 Shimadzu micro-compression testing machine can be used. The measurement conditions may be, for example, as follows:
Indenter used: flat indenter (φ 50 µm)
Load speed: 0.15 mN/sec
Measurement environment: room temperature in the atmosphere

The breaking strength can be controlled by the type of carbon-containing compound used.

### <Method for Producing Particulate Electrode Active Material Composite>

The particulate electrode active material composite of the present disclosure can be produced by, for example, a method including:
providing a slurry including silicon particles, a carbon-containing compound, and a dispersion medium;
drying and removing the dispersion medium by spray drying to form a composite particle precursor; and
carbonizing the carbon-containing compound in the composite particle precursor.

Reference may be made to the above description regarding the silicon particles and the carbon-containing compound.

The dispersion medium is not particularly limited, as long as it can disperse silicon particles and dissolve or disperse a carbon-containing compound. The dispersion medium may be, for example, water.

The drying temperature, spraying pressure of the slurry, liquid feed rate, and the like in the spray drying are not particularly limited, and can be appropriately set in consideration of the solid concentration of the slurry or the like.

The method of carbonizing the carbon-containing compound is not particularly limited, and examples thereof include a method of firing a composite particle precursor containing the carbon-containing compound. Conditions such as a firing temperature and a firing time can be appropriately set in consideration of the thermal stability of the carbon-containing compound, the G/D ratio of the resulting carbon material, the C=O/C-O area ratio and/or the C=O/C-O intensity ratio, and the like.

The firing temperature is not particularly limited, and may be, for example, 300°C or more, 500°C or more, 600°C or more, or 700°C or more, and may be 1500°C or less, 1000°C or less, 800°C or less, or 700°C or less.

The firing time is not particularly limited, and may be, for example, 1 hour or more, 3 hours or more, 5 hours or more, or 6 hours or more, and may be 20 hours or less, 15 hours or less, 10 hours or less, 8 hours or less, or 6 hours or less.

The firing may be performed under an inert atmosphere. Examples of the inert atmosphere include an argon atmosphere.

### <<Electrode Mixture>>

The electrode mixture of the present disclosure includes the particulate electrode active material composite of the present disclosure. The electrode mixture may optionally further include solid electrolyte particles, a conductive additive, a binder, and the like.

In the present disclosure, the "electrode mixture" refers to a composition that can constitute an electrode active material layer as it is or by further containing other components. In the present disclosure, the "electrode mixture slurry" refers to a slurry that includes a dispersion medium in addition to the "electrode mixture" and can be applied and dried to form an electrode active material layer.

In the present disclosure, the "electrode mixture" may be a "positive electrode mixture" or a "negative electrode mixture", particularly a "negative electrode mixture".

Hereinafter, each element constituting the electrode mixture of the present disclosure will be described.

### <Particulate Electrode Active Material Composite>

Reference may be made to the above description regarding the particulate electrode active material composite.

The content of the particulate electrode active material composite in the electrode mixture is not particularly limited, and can be appropriately set in consideration of a desired battery capacity and the like.

### <Solid Electrolyte Particles>

Examples of the solid electrolyte particles include particles of inorganic solid electrolytes such as a sulfide solid electrolyte, an oxide solid electrolyte, a nitride solid electrolyte, and a halide solid electrolyte, and organic polymer electrolytes such as a polymer electrolyte. The solid electrolyte particles may be, in particular, sulfide solid electrolyte particles.

For example, when the battery is a lithium ion secondary battery, the solid electrolyte may have lithium ionic conductivity.

Examples of the sulfide solid electrolyte having lithium ionic conductivity include a solid electrolyte containing a Li element, an X element (X represents at least one of P, As, Sb, Si, Ge, Sn, B, Al, Ga, and In), and a S element. The sulfide solid electrolyte may further contain at least one of an O element and a halogen element. Examples of the halogen element include an F element, a Cl element, a Br element, and an I element.

Examples of the sulfide solid electrolyte include Li₂S-P₂Ss, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numbers; and Z represents any of Ge, Zn, and Ga), Li₂S-GeS₂, Li₂S-SiS₂-Li₃PO₄, and Li₂S-SiS₂-LiₓMO_{y} (where x and y are positive numbers; and M represents P, Si, Ge, B, Al, Ga, and In).

In addition, examples of the oxide solid electrolyte having lithium ionic conductivity include a solid electrolyte containing a Li element, a Y element (Y represents at least one of Nb, B, Al, Si, P, Ti, Zr, Mo, W, and S), and an O element. Specific examples thereof include garnet-type solid electrolytes such as Li₇La₃Zr₂O₁₂, Li₇₋ₓLa₃(Zr₂₋ₓNbₓ)O₁₂ (0≤x≤2), and Li₅La₃Nb₂O₁₂; perovskite-type solid electrolytes such as (Li,La)TiO₃, (Li,La)NbO₃, and (Li,Sr)(Ta,Zr)O₃; nasicon-type solid electrolytes such as Li(Al,Ti)(PO₄)₃ and Li(Al,Ga)(PO₄)₃; Li-P-O-based solid electrolytes such as Li₃PO₄ and LIPON (compound in which part of O in Li₃PO₄ is substituted with N); and Li-B-O-based solid electrolytes such as Li₃BO₃ and a compound in which a part of O of Li₃BO₃ is substituted with C.

The content of the solid electrolyte particles in the electrode mixture is not particularly limited, and can be appropriately set in consideration of the desired ionic conductivity and the like.

### <Conductive Additive>

The conductive additive may be, for example, a carbon material, metal particles, or a combination thereof. The carbon material may be, for example, a non-fibrous carbon material such as acetylene black (AB) or Ketjenblack (KB); a fibrous carbon material such as vapor-grown carbon fiber (VGCF), carbon nanotube (CNT), or carbon nanofiber (CNF); or a combination thereof. The metal particles may be, for example, nickel, copper, iron, stainless steel, or a combination thereof.

The content of the conductive additive in the electrode mixture is not particularly limited, and can be appropriately set in consideration of the desired conductivity and the like.

### <Binder>

The binder may be, for example, a rubber-based binder such as butadiene rubber, hydrogenated butadiene rubber, styrene-butadiene rubber (SBR), hydrogenated styrene-butadiene rubber, nitrile-butadiene rubber, hydrogenated nitrile-butadiene rubber, acrylate-butadiene rubber (ABR), or ethylene-propylene rubber; a fluoride-based binder such as polyvinylidene fluoride (PVDF), a polyvinylidene fluoride-polyhexafluoropropylene copolymer (PVDF-HFP), polytetrafluoroethylene, or fluororubber, a polyolefin-based thermoplastic resin such as polyethylene, polypropylene, or polystyrene, an imide-based resin such as polyimide or polyamide-imide; an amide-based resin such as polyamide; an acrylic-based resin such as polymethyl acrylate or polyethyl acrylate; a methacrylic-based resin such as polymethyl methacrylate or polyethyl methacrylate; or a combination thereof.

The content of the binder in the electrode mixture is not particularly limited and can be appropriately set in consideration of the desired binding properties and the like.

### <Additional Component>

The electrode mixture may or may not further contain a component other than the above.

### <<Battery>>

The battery of the present disclosure has an electrode active material layer, and the electrode active material layer contains the electrode mixture of the present disclosure. As illustrated in Fig. 1, a battery 1 of the present disclosure may include a negative electrode current collector layer 10, a negative electrode active material layer 20, an electrolyte layer 30, a positive electrode active material layer 40, and a positive electrode current collector layer 50 in this order. In the battery of the present disclosure, particularly the negative electrode active material layer 20 may contain the electrode mixture of the present disclosure.

The battery of the present disclosure may be a liquid-based battery or a solid-state battery, particularly a solid-state battery. In the present disclosure, the "solid-state battery" refers to a battery using at least a solid electrolyte as an electrolyte, and therefore the solid-state battery may use a combination of a solid electrolyte and a liquid electrolyte as an electrolyte. The solid-state battery may be an all-solid-state battery, i.e., a battery using only a solid electrolyte as the electrolyte.

The battery of the present disclosure may be a secondary battery, particularly a lithium ion secondary battery.

The battery of the present disclosure may be restrained by a restraint member, such as an end plate, from both sides in the stacking direction of the layers. Examples of the restraint method include, but are not limited to, a method using the restraint torque of the bolt.

Hereinafter, each element constituting the battery of the present disclosure will be described. In particular, a case wherein the battery of the present disclosure is an all-solid-state battery and the electrode active material layer containing the electrode mixture of the present disclosure is a negative electrode active material layer will be described below as an example.

### <Negative Electrode Current Collector Layer>

The negative electrode current collector layer may have a foil shape, a plate shape, a mesh shape, a perforated metal shape, a foam, or the like. The negative electrode current collector layer may be a metal foil, a metal mesh, or a carbon sheet, particularly a metal foil. The negative electrode current collector layer may be made of a plurality of foils, sheets, or the like.

The metal constituting the negative electrode current collector layer is not particularly limited, and may be, for example, copper, nickel, chromium, gold, platinum, silver, aluminum, iron, titanium, zinc, cobalt, stainless steel, or the like. In particular, the negative electrode current collector layer may contain at least one metal selected from copper, nickel, and stainless steel.

For the purpose of adjusting the resistance, a coating layer of some kind may be formed on the surface of the negative electrode current collector layer. The negative electrode current collector layer may be a metal foil or a substrate on which the above metal is plated or vapor-deposited. In addition, when the negative electrode current collector layer is composed of a plurality of metal foils, some layer may be provided between the plurality of metal foils.

The thickness of the negative electrode current collector layer is not particularly limited, and may be, for example, 0.1 µm or more, or 1 µm or more, and may be 1 mm or less, or 100 µm or less.

### <Negative Electrode Active Material Layer>

The negative electrode active material layer includes the electrode mixture of the present disclosure. Reference may be made to the above description regarding the electrode mixture of the present disclosure. The negative electrode active material layer may be formed by shaping the electrode mixture of the present disclosure itself into a layer.

The thickness of the negative electrode active material layer is not particularly limited, and may be, for example, 0.1 µm or more and 1000 µm or less.

### <Solid Electrolyte Layer>

The solid electrolyte layer includes at least solid electrolyte particles and may optionally further include a binder and the like.

As regards the solid electrolyte particles and binder, reference may be made to the above description of the electrode mixture of the present disclosure.

The thickness of the solid electrolyte layer is not particularly limited, and may be, for example, 0.1 µm or more and 1000 µm or less.

### <Positive Electrode Active Material Layer>

The positive electrode active material layer includes at least a positive electrode active material, and may optionally further include a solid electrolyte, a conductive additive, a binder, and the like.

The positive electrode active material is not particularly limited, and may be, for example, an oxide active material. The oxide active material used in the lithium ion battery may be, for example, LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like. A coating layer containing a Li-ion conductive oxide such as LiNbO₃ may be formed on the surface of the active material.

The content of the positive electrode active material in the positive electrode active material layer is not particularly limited.

As regards the solid electrolyte, conductive additive, and binder, reference may be made to the above description of the electrode mixture of the present disclosure.

The thickness of the positive electrode active material layer is not particularly limited, and may be, for example, 0.1 µm or more and 1000 µm or less.

### <Positive Electrode Current Collector Layer>

The positive electrode current collector layer may have a foil shape, a plate shape, a mesh shape, a perforated metal shape, a foam, or the like. The positive electrode current collector layer may be a metal foil or a metal mesh, particularly a metal foil. The positive electrode current collector layer may be made of a plurality of foils.

The metal constituting the positive electrode current collector layer may be copper, nickel, chromium, gold, platinum, silver, aluminum, iron, titanium, zinc, cobalt, stainless steel, or the like, and in particular, the positive electrode current collector layer may contain aluminum.

For the purpose of adjusting the resistance, a coating layer of some kind may be formed on the surface of the positive electrode current collector layer. The positive electrode current collector layer may be a metal foil or a substrate on which the metal is plated or vapor-deposited. In addition, when the positive electrode current collector layer is composed of a plurality of metal foils, some layer may be provided between the plurality of metal foils.

The thickness of the positive electrode current collector layer is not particularly limited, and may be, for example, 0.1 µm or more, or 1 µm or more, and may be 1 mm or less, or 100 µm or less.

### <Additional Configuration>

The battery may be one in which each of the above-described configurations is housed inside the outer package. As the outer package, any known outer package of a battery can be adopted. A plurality of batteries may be electrically connected to each other as desired, or may be stacked on each other as desired to form a battery pack. In this case, the battery pack may be housed in a known battery case. The battery may further have an obvious configuration such as a necessary terminal. The shape of the battery may be, for example, a coin shape, a laminate (pouch) shape, a cylindrical shape, a square shape, or the like.

### <Method for Producing Battery>

The method for producing the battery of the present disclosure is not particularly limited, and includes, for example, forming an electrode active material layer containing the electrode mixture of the present disclosure.

Examples of the method of forming the electrode active material layer containing the electrode mixture include a method of mixing constituent materials such as particulate composite to obtain an electrode mixture, the obtained electrode mixture being subjected to dry molding or wet molding.

In particular, when the battery is a solid-state battery, the electrode active material layer may be press-molded for densification. Since the electrode active material layer includes the particulate electrode active material composite of the present disclosure having high strength, voids formed inside the particulate electrode active material composite are maintained even by such pressing.

The method for producing a battery of the present disclosure may further include forming an electrode laminate by laminating a negative electrode current collector layer, a negative electrode active material layer, a solid electrolyte layer, a positive electrode active material layer, and a positive electrode current collector layer in this order.

Other members such as a terminal are attached to the electrode laminate, if necessary. The electrode laminate is housed in a battery case and sealed to obtain a battery.

### EXAMPLES

### <<Example 1>>

### <Preparation of Particulate Electrode Active Material Composite>

Silicon (Si) particles serving as electrode active material particles were dispersed in an aqueous solution obtained by dissolving fructose in pure water serving as a dispersion medium to prepare a slurry. The dispersion medium in the resulting slurry was dried and removed by spray drying, and the Si particles were formed into a composite to obtain a composite particle precursor. The fructose in the obtained composite particle precursor was carbonized by firing at 700°C for 6 hours under an argon atmosphere to obtain particulate electrode active material composite.

### <Measurement of Breaking Strength>

The breaking strength was measured by scattering an extremely small amount of particulate composite onto a sample stage of a measuring device, measuring the diameters in the X direction and Y direction, setting the average particle diameter as d, and applying a load to each particle. When the displacement in the load-displacement diagram rapidly increased, it was determined that the particles were destroyed on a large scale, and the apparent breaking strength of the particles was calculated using the following formula.${S}_{t} = \frac{2.8 P}{{πd}^{2}}$
Sₜ: apparent breaking strength
P: breaking load
d: average particle diameter of measured particles

For the measurement of the breaking strength, an MCT-210 Shimadzu micro-compression testing machine was used. The measurement conditions were as follows:
Indenter used: flat indenter (φ 50 µm)
Load speed: 0.15 mN/sec
Measurement environment: room temperature in the atmosphere

The values of the breaking strength obtained are listed in Table 1.

### <Analysis of G/D Ratio of Carbon Material>

The analysis of the G/D ratio of the carbon material was performed by measuring peak intensities of the G band and the D band by Raman spectroscopy, and calculating the proportion of the maximum peak intensity of the G band to the maximum peak intensity of the D band. For the analysis of the G/D ratio, a microscopic Raman spectrometer XploRA PLUS available from HORIBA, Ltd. was used. The values of the G/D ratio obtained are listed in Table 1.

### <C=O/C-O Area Ratio and C=O/C-O Intensity Ratio of Carbon Material>

The analysis of the C=O/C-O area ratio and the C=O/C-O intensity ratio of the carbon material was performed by measuring the peak area and peak intensity of the binding energy of C=O and C-O by X-ray electron spectroscopy and calculating the proportion of the value for C=O to the value for C-O. For the analysis of the C=O/C-O area ratio and the C=O/C-O intensity ratio, PHI5000 VersaProbe II available from ULVAC-PHI, Inc. was used. The values of the C=O/C-O area ratio and the C=O/C-O intensity ratio are listed in Table 1.

### <Production of Negative Electrode Active Material Layer>

The binder, conductive additive, solid electrolyte particles, and obtained particulate electrode active material composite were added to an organic solvent to prepare a mixed solution. The mixed solution was kneaded with an ultrasonic homogenizer to obtain an electrode mixture slurry. The obtained electrode mixture slurry was applied to a copper foil as a negative electrode current collector layer to produce a negative electrode active material layer. Specifically, in this example, an electrode active material layer formed of an electrode mixture containing the particulate composite of the present disclosure was used as a negative electrode active material layer. Thus, a negative electrode laminate in which the negative electrode current collector layer and the negative electrode active material layer were laminated was obtained and formed into a strip shape.

### <Production of Solid Electrolyte Layer>

A binder and solid electrolyte particles were added to an organic solvent to prepare a mixed solution. The mixed solution was kneaded using an ultrasonic homogenizer to obtain a solid electrolyte mixture slurry. The obtained solid electrolyte mixture slurry was applied to an aluminum (Al) foil as a release sheet and dried to prepare a solid electrolyte layer. A total of three solid electrolyte layers were produced in the same procedure and formed into a strip shape.

### <Production of Positive Electrode Active Material Layer>

A binder, conductive additive, solid electrolyte particles, and LiNi_{0.8}Co_{0.15}Mn_{0.05}O₂ as a positive electrode active material were added to an organic solvent to prepare a mixed solution. The mixed solution was kneaded using an ultrasonic homogenizer to obtain a positive electrode mixture slurry. The obtained positive electrode mixture slurry was applied to an Al foil as a positive electrode current collector layer to produce a positive electrode active material layer. Thus, a positive electrode laminate in which the positive electrode current collector layer and the positive electrode active material layer were laminated was obtained, and the positive electrode laminate was formed into a strip shape.

### <Production of Battery>

The negative electrode active material layer and the first solid electrolyte layer were laminated so as to face each other and roll-pressed at 25°C and a pressure of 50 kN/cm. The solid electrolyte layer was transferred to the negative electrode active material layer by peeling off the Al foil as a release sheet from the solid electrolyte layer.

The positive electrode active material layer and the second solid electrolyte layer were laminated so as to face each other and roll-pressed at 165°C and a pressure of 50 kN/cm. The solid electrolyte layer was transferred to the positive electrode active material layer by peeling off the Al foil as a release sheet from the solid electrolyte layer.

The negative electrode laminate to which the solid electrolyte layer was transferred and the positive electrode laminate to which the solid electrolyte layer was transferred were punched with a punching machine having a size of φ 13.00 mm and φ 11.28 mm, respectively.

The third solid electrolyte layer punched out to a predetermined size was further transferred onto the first solid electrolyte layer laminated on the negative electrode active material layer using a uniaxial press machine. The negative electrode laminate and the positive electrode laminate were laminated so that the solid electrolyte layer on the negative electrode active material layer and the solid electrolyte layer on the positive electrode active material layer faced each other, thereby obtaining an electrode laminate body.

A current extraction tab was attached to the positive electrode active material layer and the negative electrode active material layer, and the resulting electrode laminate was sealed in an Al laminate using a vacuum laminate sealer and restrained at a pressure of 5 MPa to produce an all-solid-state battery.

### <Evaluation>

### (Restraint Pressure Increase Amount)

The pressure increase amount when the obtained all-solid-state battery was charged from the uncharged state to 4.05 V was measured using a load cell. The restraint pressure increase amount means the expansion amount of the particulate electrode active material composite.

### <<Examples 2 to 4 and Comparative Examples 1 and 2>>

Particulate electrode active material composite and a battery were obtained and evaluated in the same manner as in Example 1 except that the type of the carbon-containing compound was changed as shown in Table 1. The results are shown in Table 1. It should be noted that, in Table 1, the restraint pressure increase amount is shown as a value normalized with the value of Example 3 set to 1.00.

### [Table 1]

**Table 1**

| | Carbon-containing compound | | Breaking strength [MPa] | G/D ratio | C=O/C-O ratio | | Restraint pressure increase amount [-] |
|---|---|---|---|---|---|---|---|
| | Type | Content [mass%] | | | Area ratio | Intensity ratio | |
| Example 1 | Fructose | 2 | 8.8 | 1.50 | 1.2 | 2.3 | 0.67 |
| Example 2 | Glucose | 2 | 8.7 | 1.51 | 0.6 | 1.1 | 0.70 |
| Example 3 | Sucrose | 2 | 4.7 | 1.33 | 0.0 | 0.0 | 1.00 |
| Example 4 | Maltose | 2 | 6.8 | 1.49 | 1.1 | 2.2 | 0.77 |
| Comparative Example 1 | Starch | 2 | 1.5 | 0.10 | 8.1 | 6.1 | 2.50 |
| Comparative Example 2 | Citric acid | 2 | 2.2 | 0.17 | 11.7 | 7.4 | 2.30 |

As shown in Table 1, in the batteries of Examples, in which the G/D ratio of the carbon material and/or the C=O/C-O area ratio and/or the C=O/C-O intensity ratio were within the ranges of the present disclosure, the restraint pressure increase amount, i.e., the expansion amount of the particulate electrode active material composite was small.

### REFERENCE SIGNS LIST

- 1: Battery
- 10: Negative electrode current collector layer
- 20: Negative electrode active material layer
- 30: Electrolyte layer
- 40: Positive electrode active material layer
- 50: Positive electrode current collector layer

## Claims

1. Particulate electrode active material composite,
wherein the particulate electrode active material composite is formed of a plurality of silicon particles and a carbon material binding the plurality of silicon particles to each other, wherein
in a Raman spectrum, a G/D ratio of the carbon material is 0.2 or more, and/or
in an XPS spectrum, a C=O/C-O area ratio of the carbon material and/or a C=O/C-O intensity ratio of the carbon material is 5.0 or less.

2. The particulate composite according to claim 1, wherein in the Raman spectrum, the G/D ratio of the carbon material is 0.2 or more.

3. The particulate composite according to claim 2, wherein in the Raman spectrum, the G/D ratio of the carbon material is from 1.0 to 2.0.

4. The particulate composite according to claim 1, wherein in the XPS spectrum, the C=O/C-O area ratio of the carbon material and/or the C=O/C-O intensity ratio of the carbon material is 5.0 or less.

5. The particulate composite according to claim 4, wherein in the XPS spectrum,
the C=O/C-O area ratio of the carbon material is 2.0 or less, and/or
the C=O/C-O intensity ratio of the carbon material is 3.0 or less.

6. The particulate composite according to claims 1 to 5, wherein a breaking strength is from 3.0 MPa to 10.0 MPa.

7. The particulate composite according to claims 1 to 6, wherein the silicon particles are porous silicon particles.

8. An electrode mixture including the particulate composite according to claims 1 to 7.

9. The electrode mixture according to claim 8, wherein the electrode mixture further includes solid electrolyte particles.

10. The electrode mixture according to claim 9, wherein the solid electrolyte particles are sulfide solid electrolyte particles.

11. A battery having an electrode active material layer, wherein
the electrode active material layer contains the electrode mixture according to claims 8 to 10.

12. The battery according to claim 11, wherein the battery is a solid-state battery.
